# EUROPEAN PATENT APPLICATION

(11) **EP 3 557 901 A1**
(43) Date of publication of application: **23.10.2019**
(21) Application number: 19167719.4
(22) Date of filing: 08.04.2019
(51) Int. Cl.: H04W 24/10, H04L 12/26, H04L 12/24, H04W 56/00

(54) **NETWORK MONITORING**

(30) Priority: 17.04.2018 FI 20185363
(71) Applicant: Telia Company AB, 169 94 Solna (SE)
(72) Inventor: KAARA, Pasi, 33400 TAMPERE (FI)
(74) Representative: Berggren Oy, Helsinki & Oulu

(57) **Abstract**

The invention relates to a method for obtaining measurement data from a plurality of agent devices (120A, 120B, 120C, 120D). In the method a data connection is established from the manager device (110) to the plurality of agent devices (120A, 120B, 120C, 120D), the data connection carrying a request to transmit measurement data. The request comprises an indication on at least one instant of time for initiating a measurement. The measurement data is transmitted to the manager device (110) by the plurality of agent devices (120A, 120B, 120C, 120D) in response to the generation of the measurement data in accordance with the indication comprising the at least one instant of time for initiating the measurement by applying a common clock signal for the generation of the measurement data. The invention also relates to a manager device (110), a computer program product and a system.

## Description

### TECHNICAL FIELD

The invention concerns in general the technical field of a communication networks. More particularly, the invention concerns network monitoring of the communication network.

### BACKGROUND

The communication networks require different kind of management and control. The network management actions are typically performed in response to network monitoring. The network monitoring may refer to monitoring of one or more network elements and/or communication paths. A specific protocol developed for network management purposes is so called Simple Network Management Protocol (SNMP). The SNMP is a standardized protocol developed for collecting and organizing information about devices on IP networks and for modifying that information to change device behavior. The SNMP operates in the application layer of an Internet protocol suite, wherein SNMP messages are transported via User Datagram Protocol (UDP).

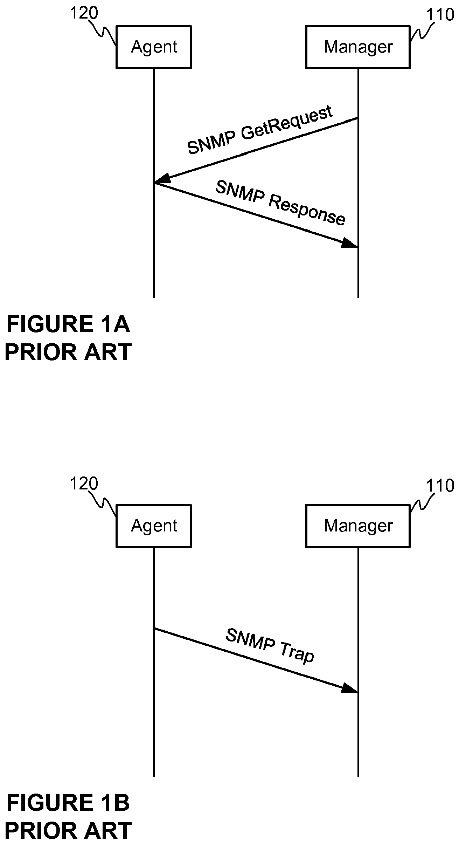

The operation of the SNMP is arranged so that there are one or more administrative computers called managers which have a task of monitoring and/or managing a group of devices in a communication network. Each managed, or monitored, system executes a software component called an agent. The agent is configured to report information by means of the SNMP to the manager. More specifically, the manager may send requests to a specific port in the agent and the agent responds with a response to a source port on the manager. Alternatively, the agent may be configured to respond with so called trap. The trap is an asynchronous notification from agent to manager. The trap enables the agent to notify the manager on significant events by way of an unsolicitated SNMP message. These two alternative ways of reporting a schematically illustrated in Figures 1A and 1B.

Figure 1A schematically illustrates the above described first implementation in which the manager 110 requests the agent 120 to provide data with a request called SNMP GetRequest. In response to a receipt of such a request the agent 120 is configured to, according to the standard, provide the data with a response called SNMP Response. The Figure 1B, in turn, schematically illustrates the embodiment in which the agent 120 is configured to provide the data to the manger 110 with the unsolicited SNMP message called SNMP Trap. The SNMP Trap message may be transmitted asynchronously or synchronously depending on an implementation.

The above described mechanisms for monitoring devices with an executed agent software are functioning well in principle. However, challenges may incur when a manager device is configured to monitor a plurality of agent devices because such an environment causes lot of exchange of data and, hence, computing resources of the manager device may be overloaded. This is especially true when the monitoring system is implemented so that the manager device is configured to compare data obtained from different sources i.e. from different agent devices. In such an implementation a comparability of pieces of data obtained from different sources plays an essential role, and hence there is need to develop solutions by means of which accuracy of the monitoring system may be improved.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, a manager device, a computer program product and a system for obtaining measurement data. The objectives of the invention are reached by a method, a manager device, a computer program product and a system as defined by the respective independent claims.

According to a first aspect, a method for obtaining measurement data from a plurality of agent devices is provided, the method comprising: establishing, by a manager device, a data connection from the manager device to the plurality of agent devices, the data connection carrying a request to transmit measurement data from the plurality of agent devices, the request comprising an indication defining at least one instant of time for initiating a measurement for generating the measurement data, and receiving, by the manager device, the measurement data from the plurality of agent devices, the measurement data is transmitted by the plurality of agent devices in response to the generation of the measurement data in accordance with the indication comprising the at least one instant of time for initiating the measurement by applying a common clock signal for the generation of the measurement data by the agent devices.

Moreover, a duration of the measurement may be defined in the indication. The duration of the measurement may be defined by providing at least one of the following in the indication: an instant of time for ending the measurement, a duration of the measurement expressed with a quantity of time.

An instant of time for transmitting the measurement data by the agent device may also be defined in the indication.

A receipt of the measurement data from the plurality of agent devices may be performed by inquiring the measurement data from the agent devices.

According to a second aspect, a manager device is provided, the manager device comprising: a processing unit comprising least one processor; at least one memory including computer program code; the at least one memory and the computer program code configured to, with the processing unit, cause the manager device to perform: establish a data connection to the plurality of agent devices, the data connection carrying a request to transmit measurement data from the plurality of agent devices, the request comprising an indication defining at least one instant of time for initiating a measurement for generating the measurement data; and receive the measurement data from the plurality of agent devices, the measurement data is transmitted by the plurality of agent devices in response to the generation of the measurement data in accordance with the indication comprising the at least one instant of time for initiating the measurement by applying a common clock signal for the generation of the measurement data by the agent devices.

Moreover, the manager device may be configured to define a duration of the measurement in the indication. The manager device may be configured to define the duration of the measurement to the agent devices by providing at least one of the following in the indication: an instant of time for ending the measurement, a duration of the measurement expressed with a quantity of time.

The manager device may be configured to define an instant of time for transmitting the measurement data by the agent device in the indication.

Still further, the manager device may be configured to inquire the measurement data from the agent devices for receiving the measurement data from the plurality of agent devices.

According to a third aspect, a computer program product for obtaining measurement data from a plurality of agent devices is provided which, when executed by at least one processor, cause a manager device to perform the method as described above.

According to a fourth aspect, a system is provided, the system comprising: at least one manager device and a plurality of agent devices, wherein the system: a manager device is configured to establish a data connection to the plurality of agent devices, the data connection carrying a request to transmit measurement data from the plurality of agent devices, the request comprising an indication defining at least one instant of time for initiating a measurement for generating the measurement data; and in response to a receipt of the request the plurality of agent devices is configured to transmit the measurement data in response to the generation of the measurement data in accordance with the indication comprising the at least one instant of time for initiating the measurement by applying a common clock signal for the generation of the measurement data by the plurality of agent devices.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figures 1A and 1B illustrates schematically prior art solutions for monitoring network devices.
Figure 2 illustrates schematically an example of a communication system implementing at least one embodiment of the invention.
Figure 3 illustrates schematically an example of a method according to an embodiment of the invention.
Figure 4 illustrates schematically an example of a manager device according to an embodiment of the invention.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

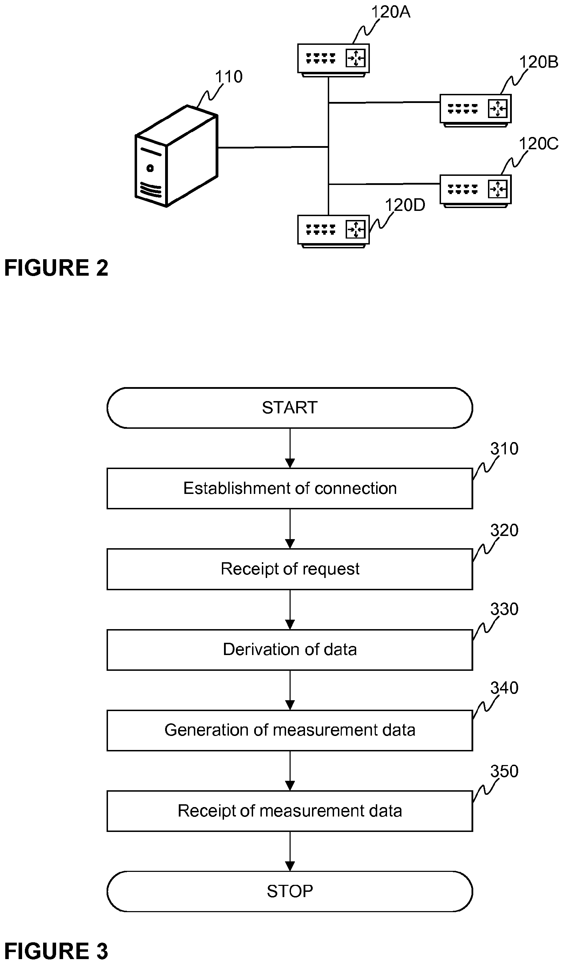

Figure 2 schematically illustrates an example of a communication system, or a network, in which the present invention is applicable. The communication system comprises a manager device 110, such as a server device, which is configured to monitor at least some aspects of the communication environment. The aspects may e.g. relate to an operation of an agent device 120A, 120B, 120C, 120D, such as a routing device, on which data is obtained for monitoring purposes. The data may e.g. be measurement data obtainable by means of the agent device 120A, 120B, 120C, 120D. Especially, at least some aspects of the present invention relate to a solution by means of which it is possible to obtain comparable measurement data from a plurality of agent devices 120A, 120B, 120C, 120D in order to enable the manager device 110 generating e.g. reports, or any other information, on an operation of the communication system and/or any devices therein. For sake of clarity it is worthwhile to mention that the manager device 110 and the agent devices 120A, 120B, 120C, 120D in Figure 2 may represent standalone devices, a plurality of devices whose functionalities are distributed to multiple physical entities or a system configured to perform certain tasks. For example, the mentioned entities may be configured to execute a computer program code causing them to operate as will be described herein in response to the execution of the computer program code. Moreover, the mentioned entities are communicatively coupled over a communication network wherein the communication is based on a predetermined communication technology.

Next some aspects of the solution according to a present invention are described by referring to Figure 3 in which it is schematically illustrated at least some functionalities of different entities of the communication system as method steps. At least some of the method steps as schematically depicted in Figure 3 may be performed concurrently, at least in part. First, in step 310 the manager device 110 may be configured to establish a connection to a plurality of agent devices 120A, 120B, 120C, 120D. The establishment of the connection 310 may cover any connection method by means of which the manager device may deliver data to the agent devices 120A, 120B, 120C, 120D in order to cause the agent devices 120A, 120B, 120C, 120D to operate as will be described. A non-limiting example of the connection may be a data connection established over TCP/IP protocol. In other words, the established data connection may carry data representing a request to transmit measurement data from the agent device 120A, 120B, 120C, 120D in question to the manager device 110. The request data may also carry further parameters for informing the plurality of agent devices 120A, 120B, 120C, 120D to operate accordingly. According to an embodiment of the invention the request may carry data in a form of an indication which indication represents i.e. defines either directly or indirectly at least one instant of time when the agent devices 120A, 120B, 120C, 120D shall perform the measurement for generating the measurement data. Moreover, the indication may comprise further data, or parameters, with respect to the measurement, such as a duration the measurement shall take place. Such a parameter may be applicable when the agent device 120A, 120B, 120C, 120D monitors e.g. an operational parameter relating e.g. to a data flow, such as an amount of data or an average data speed routed through the agent device 120A, 120B, 120C, 120D, such as a routing device, and a measurement performed through a period of time is meaningful. Moreover, the definition of the period of time may be necessary in a resource-wise, e.g. for optimizing an amount of measured data and in that way to maintain the delivery of the data efficient. Hence, the plurality of agent devices 120A, 120B, 120C, 120D receive the request 320 and in response to that derive data 330 carried in the request for taking one or more following actions according to the present invention. The plurality of agent devices 120A, 120B, 120C, 120D may e.g. derive information indicating at least one instant of time for performing a measurement as well as some further aspects, such as a duration of the measurement. In response to the derivation of data, i.e. information with respect to the measurement, the plurality of agent devices 120A, 120B, 120C, 120D may be configured to generate the requested measurement data 340. The generation of the requested measurement data 340 may refer to an initiation of a measurement procedure in the plurality of agent devices 120A, 120B, 120C, 120D at the instant of time indicated in the request. In order to generate the measurement data at the same instant of time the devices, i.e. at least the agent devices 120A, 120B, 120C, 120D, but possibly also the manager device 110, are attached to a common clock signal e.g. by applying an applicable protocol, such as network time protocol (NTP), for synchronizing the participating devices at a certain hierarchal level within the same clock signal, or at least within an acceptable margin thereto. The implementation of the synchronization may vary and may depend on the implementation how the clock signal is arranged for the participating devices. In other words, when the clock signal reaches the value disclosed in the indication the agent device 120A, 120B, 120C, 120D in question initiates the generation of the measurement data 340. In case the indication comprises further parameters, such as the duration of the measurement (defined e.g. with starting time and ending time), the agent device 120A, 120B, 120C, 120D in question may apply the parameter accordingly and e.g. may stop the generation of the measurement data when the clock signal reaches the ending time defined for the monitoring period. As a result of the generation of the measurement data 340 the agent device 120A, 120B, 120C, 120D in question possesses, e.g. in a memory of the device, the requested measurement data. Finally, the plurality of agent devices 120A, 120B, 120C, 120D transmit the generated measurement data to the manager device 110 for further processing and those are received 350 by the manager device 110. The transmit of the measurement data may comprise a generation of a message of a predetermined type by the agent device 120A, 120B, 120C, 120D and a transmit of the message along a predetermined communication path, such as over a TCP/IP protocol, to the manager device 110.

The implementation of the communication system for obtaining measurement information from a plurality of agent devices 120A, 120B, 120C, 120D in the manner as described allows almost real-time measurement capability of the agent devices 120A, 120B, 120C, 120D so that the manager device 110 receives measurement data from the plurality of agent devices 120A, 120B, 120C, 120D, which measurement data is comparable to each other. This is because the measurement data is obtained from different agent devices 120A, 120B, 120C, 120D for the same time period. This means that the manager device 110 may obtain raw measurement data in an efficient way as well as the measurement period may be kept short due to the framework achieved with synchronized measurement. For example, the measurement period may be less than one minute, or even seconds.

The description of an embodiment of the invention described above is described so that the agent devices 120A, 120B, 120C, 120D transmit the measurement data to the manager device 110 in response to the measurement. According to another embodiment the agent device 120A, 120B, 120C, 120D in question may store the measurement data in a memory, such as in a cache memory. The stored measurement data may e.g. comprise an identifier for identifying the measurement data. According to the other embodiment the manager device 110 may be configured to inquire the measurement data from the memory with a predetermined signal, such as by providing the identifier of the measurement data under which the measurement data is stored in the memory. In such an implementation the manager device 110 may have generated the identifier prior to the establishment of the connection 310 in order to transmit the identifier to one or more agent devices 120A, 120B, 120C, 120D over the connection to be used at least in storing of the measurement data in the memory. In response to the inquiry of the measurement data from the memory of the agent device 120A, 120B, 120C, 120D the stored measurement data is received 350 in the manager device 110. In some further embodiment the manager device 110 may be configured so that the request generated by the manager device 110 carries an indication which comprises at least the following information: the instant of time when the measurement is to be initiated but also an instant of time when the agent device 120A, 120B, 120C, 120D shall transmit the measurement data to the manager device 110. Furthermore, the indication may also comprise data representing a period of time during which the measurement shall be performed. In other words, the indication may comprise the instant of time for starting the measurement, the instant of time for ending the measurement and an instant of time for transmitting the measurement data to the manager device 110. Alternatively or in addition, the indication may comprise the instant of time for starting the measurement, duration of the measurement (e.g. in seconds) and an instant of time for transmitting the measurement data to the manager device 110. The parameters included in the indication are not limited to the ones described above.

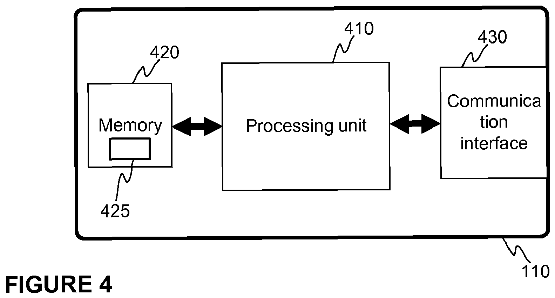

An example of the manager device 110 is schematically illustrated in Figure 4. The manager device 110 may comprise a processing unit 410 including one or more processors, one or more memories 420 and one or more communication interfaces 430. The entities may be communicatively coupled to each other with e.g. a data bus. The communication interface 430 may comprise necessary hard-ware and functionality for coupling the manager device 110 to the communication network for communicating with any other entity in the network, such as a plurality of agent devices. The communication interface may implement either wired or wireless communication protocol and has necessary hardware thereto. The communication interface 430 may be at least partly controlled by the one or more processors 410 e.g. by executing portions of computer program code 425 stored in the one or more memories 420. Moreover, the computer program code 425 may define instructions that cause the manager device 110 to operate as described when at least one portion of the computer program code 425 is executed by the processing unit 410. Naturally, the manager device 110 schematically illustrated in Figure 4 does not necessarily comprise all elements of the manager device 110. For example, power related elements needed for bringing the manager device 110 into operation are not shown in Figure 4.

The agent device 120A, 120B, 120C, 120D may have the corresponding elements as the manager device 110 as schematically illustrated in Figure 4. The agent device 120A, 120B, 120C, 120D may be configured, e.g. through an execution of a computer program code, to perform a measurement procedure for generating a requested measurement data to the manager device 110.

Based on above it is clear that the manager device 110 and the agent devices 120A, 120B, 120C, 120D store and execute computer program code, which may form at least some aspects of the present invention. Specifically, the aspects of the present inventio may relate to a processor-readable non-transitory storage medium on which is stored one or more sets of processor executable instructions, e.g. in a form of portions of computer program code, configured to implement one or more of steps of the method by the mentioned entities as described. The instructions may also reside, completely or in part, within a main memory, the static memory, and/or within the processor during execution thereof by the manager device or the agent device 120A, 120B, 120C, 120D. The term computer-readable medium shall also cover, but is not limited to, solid-state memories such as a memory card or other package that houses one or more read-only (non-volatile) memories, random access memories, or other rewritable (volatile) memories; magneto-optical or optical medium such as a disk or tape; as well as carrier wave signals such as a signal embodying computer instructions in a transmission medium; and/or a digital file attachment to e-mail or other information archive or set of archives considered to be a distribution medium equivalent to a tangible storage medium.

Naturally the mentioned entities, i.e. the manager device 110 and a plurality of agent devices 120A, 120B, 120C, 120D may form a communication system by means of which the obtaining of the measurement data may be arranged in the communication system. An interaction between the mentioned devices may be arranged over a communication network in a secured manner e.g. by applying an applicable encryption protocol in the communication, such one wherein username and password are needed in accessing the other entity. In some embodiment of the invention at least some of the entities, such as the agent devices 120A, 120B, 120C, 120D may be configured to encrypt the measurement data with a predefined encryption method, e.g. based on public and private keys, which encrypted measurement data may be decrypted in the manager device 110.

The specific examples provided in the description given above should not be construed as limiting the applicability and/or the interpretation of the appended claims. Lists and groups of examples provided in the description given above are not exhaustive unless otherwise explicitly stated.

## Claims

1. A method for obtaining measurement data from a plurality of agent devices (120A, 120B, 120C, 120D), the method comprising:
establishing (310), by a manager device /110), a data connection from the manager device (110) to the plurality of agent devices (120A, 120B, 120C, 120D), the data connection carrying a request to transmit measurement data from the plurality of agent devices (120A, 120B, 120C, 120D), the request comprising an indication defining at least one instant of time for initiating a measurement for generating the measurement data,
receiving, by the manager device (110), the measurement data from the plurality of agent devices (120A, 120B, 120C, 120D), the measurement data is transmitted by the plurality of agent devices (120A, 120B, 120C, 120D) in response to the generation of the measurement data in accordance with the indication comprising the at least one instant of time for initiating the measurement by applying a common clock signal for the generation of the measurement data by the agent devices (120A, 120B, 120C, 120D).

2. The method of claim 1, wherein a duration of the measurement is defined in the indication.

3. The method of claim 2, wherein the duration of the measurement is defined by providing at least one of the following in the indication: an instant of time for ending the measurement, a duration of the measurement expressed with a quantity of time.

4. The method of any of the preceding claims, wherein an instant of time for transmitting the measurement data by the agent device (120A, 120B, 120C, 120D) is defined in the indication.

5. The method of any of the preceding claims 1-3, wherein a receipt of the measurement data from the plurality of agent devices (120A, 120B, 120C, 120D) is performed by inquiring the measurement data from the agent devices (120A, 120B, 120C, 120D).

6. A manager device (110) comprising:
a processing unit (410) comprising least one processor;
at least one memory (420) including computer program code (425);
the at least one memory (420) and the computer program code (425) configured to, with the processing unit (410), cause the manager device (110) to perform:
establish (310) a data connection to the plurality of agent devices (120A, 120B, 120C, 120D), the data connection carrying a request to transmit measurement data from the plurality of agent devices (120A, 120B, 120C, 120D), the request comprising an indication defining at least one instant of time for initiating a measurement for generating the measurement data,
receive the measurement data from the plurality of agent devices (120A, 120B, 120C, 120D), the measurement data is transmitted by the plurality of agent devices (120A, 120B, 120C, 120D) in response to the generation of the measurement data in accordance with the indication comprising the at least one instant of time for initiating the measurement by applying a common clock signal for the generation of the measurement data by the agent devices (120A, 120B, 120C, 120D).

7. The manager device (110) of claim 6, wherein the manager device (110) is configured to define a duration of the measurement in the indication.

8. The manager device (110) of any of the preceding claims 7, wherein the manager device (110) is configured to define the duration of the measurement to the agent devices (120A, 120B, 120C, 120D) by providing at least one of the following in the indication: an instant of time for ending the measurement, a duration of the measurement expressed with a quantity of time.

9. The manager device (110) of any of the preceding claims 6-8, wherein the manager device (110) is configured to define an instant of time for transmitting the measurement data by the agent device (120A, 120B, 120C, 120D) in the indication.

10. The manager device (110) of any of the preceding claims 6-8, wherein the manager device is configured to inquire the measurement data from the agent devices (120A, 120B, 120C, 120D) for receiving the measurement data from the plurality of agent devices (120A, 120B, 120C, 120D).

11. A computer program product for obtaining measurement data from a plurality of agent devices (120A, 120B, 120C, 120D) which, when executed by at least one processor, cause a manager device (110) to perform the method according to any of claims 1-5.

12. A system, comprising:
at least one manager device (110), and
a plurality of agent devices (120A, 120B, 120C, 120D),
wherein the system: a manager device (110) is configured to establish a data connection to the plurality of agent devices (120A, 120B, 120C, 120D), the data connection carrying a request to transmit measurement data from the plurality of agent devices (120A, 120B, 120C, 120D), the request comprising an indication defining at least one instant of time for initiating a measurement for generating the measurement data,
in response to a receipt of the request the plurality of agent devices (120A, 120B, 120C, 120D) is configured to transmit the measurement data in response to the generation of the measurement data in accordance with the indication comprising the at least one instant of time for initiating the measurement by applying a common clock signal for the generation of the measurement data by the plurality of agent devices (120A, 120B, 120C, 120D).
